# EUROPEAN PATENT APPLICATION

(11) **EP 1 863 308 A1**
(43) Date of publication of application: **05.12.2007**
(21) Application number: 06714879.1
(22) Date of filing: 28.02.2006
(51) Int. Cl.: H04Q 7/38, H04B 7/26, H04L 9/32

(54) **DATA COMMUNICATION SYSTEM, ALTERNATE SYSTEM SERVER, COMPUTER PROGRAM, AND DATA COMMUNICATION METHOD**

(30) Priority: 03.03.2005 JP 2005058868
(71) Applicant: FeliCa Networks, Inc., Tokyo 141-0032 (JP)
(72) Inventor: TOKUNO, Kota FeliCa Networks, Inc., Osaki Shinagawa-Ku Tokyo 141-0032 (JP); HIKITA, Tomoharu FeliCa Networks, Inc., Osaki Shinagawa-Ku Tokyo 141-0032 (JP)
(74) Representative: Körber, Martin Hans
(86) International application number: PCT/JP2006/303749
(87) International publication number: WO 2006/093148

(57) **Abstract**

In a data communication system, a portable communication terminal is authenticated by an agent system (105) including an authentication unit (225), a decision unit (225) and a communication unit (235). The authentication unit (215) is adapted to perform, based on granted license information received from the portable communication terminal, at least one of a system authentication process to authenticate the service providing system based on a system authentication key, a first client authentication process to authenticate the portable communication terminal based on a client authentication key, and a second client authentication process to authenticate the portable communication terminal based on identification information identifying the portable communication terminal. The decision unit (225) is adapted to, after the authentication is completed, determine whether to permit communication, based on the license described in the granted license information. The communication unit (235) is adapted to, if communication is permitted, perform the communication process with the noncontact IC card module.

## Description

### Technical Field

The present invention relates to a data communication system, an agent system server, a computer program, and a data communication method.

### Background Art

Recent advances in information processing technology and communication network technology have made it possible for an information processing apparatus such as a personal computer to easily access various kinds of information stored in a server or the like via a communication network.

Unlike old types of portable telephones whose function is limited to voice communication, state-of-the-art portable telephones are capable of easily accessing various kinds of information via a communication network such as the Internet by means of protocol conversion and have many other functions similar to those of an information processing apparatus.

On the other hand, a noncontact IC card is known which is capable of communicating with an information processing apparatus such as a server via a reader/writer. Furthermore, a technique is disclosed (for example, in Patent Document 1 (Japanese Unexamined Patent Application Publication No. 2002-133373)) in which a noncontact IC card or a device capable of functioning as a noncontact IC card (hereinafter, referred to as a noncontact IC card module) is installed in a small-sized portable communication terminal such as a portable telephone such that the noncontact IC card is capable with communicating with an external system.

In the noncontact IC card module disclosed in Japanese Unexamined Patent Application Publication No. 2002-133373, it is allowed to register a plurality of applications produced by a service provision management system at a service provider site.

In this technique, a user is allowed to register one or more applications as required, whereby an information process can be performed by the noncontact IC card module while maintaining the portable communication terminal at a location close to a reader/writer to receive service provided by a service providing system.

Note that information processing such as reading or writing of data from or into the noncontact IC card module is performed via communication between the noncontact IC card and a management system of a company or the like that issues and/or manages the noncontact IC card. Hereinafter, such a communication process to perform an information process associated with a noncontact IC card module or the like will be referred to simply as a communication process.

### Disclosure of Invention

When a management system receives a request to execute a communication process with a noncontact IC card module of a portable communication terminal, the management system has to authenticate the portable communication terminal that has issued the request, for the purpose of security. However, the authentication method is different depending on the carrier of portable communication terminals, and some carriers do not provide authentication means.

Thus, users can receive services only from service providing systems that provide the same authentication method as that applied to portable communication terminals of users, and authentication methods available for management systems of providers are limited. This makes it difficult for the noncontact IC card module to execute information processing in an efficient manner.

In view of the above, it is an object of the present invention to provide a data communication system, an agent system server, a computer program, and a data communication method, capable of authenticating a portable communication terminal according to a combination of one or more of a plurality of authentication methods/means, and capable of, if the authentication is successfully passed, executing a communication process on a noncontact IC card module installed in the portable communication terminal.

To achieve the above object, according to a first aspect of the present invention, there is provided a data communication system including one or more portable communication terminals each including a noncontact IC card module adapted to perform information processing in response to a request from the outside, a service providing system adapted to provide a service via the information processing performed by the noncontact IC card module, and an agent system adapted to perform, for the service providing system, a communication process with the noncontact IC card module. The portable communication terminal in the data communication system includes a requesting unit adapted to request the service providing system to provide granted license information possessed by the service providing system, the granted license information indicating a license associated with the communication process granted to the portable communication terminal, the license information being necessary for the communication process between the noncontact IC card module and the agent system. The service providing system includes an acquisition unit adapted to, if a request is received from one of the portable communication terminals, acquire granted license information associated with the portable communication terminal that has issued the request. The acquired granted license information is encrypted by the service providing server using a system authentication key that is possessed by both the agent system and the service providing system and that is used to encrypt/decrypt information, the granted license information is further encrypted by the portable communication terminal using a client authentication key that is possessed by both the portable communication terminal and the agent system and that is used to encrypt/decrypt information, and the resultant granted license information is transmitted to the agent system. The agent system includes and authentication unit, a decision unit, and a communication unit. The authentication unit is adapted to perform, based on granted license information received from the portable communication terminal, a combination of one or more of a plurality of authentication processes including (1) a system authentication process to authenticate the service providing system based on the system authentication key, (2) a first client authentication process to authenticate the portable communication terminal based on the client authentication key, and (3) a second client authentication process to authenticate the portable communication terminal based on identification information identifying the portable communication terminal. The decision unit is adapted to, after the authentication by the authentication unit is completed, determine whether to permit communication or not, based on the license described in the granted license information, and the communication unit adapted to, if communication is permitted by the decision unit, perform the communication process with the noncontact IC card module. Note that although it is herein assumed that the identification information identifies a portable communication terminal by way of example, the identification information does not necessarily identify a portable communication terminal, but the identification information may identify, for example, a client application stored in a portable communication terminal. The system authentication key or the client authentication key may be updated at predetermined time intervals.

In this data communication system, each portable communication terminal receives granted license information from the service providing system and transfers the received granted license information to the agent system. If the agent system receives granted license information from the portable communication terminal, the agent system performs a combination of one or more of the plurality of the authentication processes to verify the validation of the service providing system and the portable communication terminal based on the granted license information. If the authentication is successfully passed and permission in terms of communication is granted, the communication unit and the noncontact IC card module included in the portable communication terminal perform the communication process.
In the above-described authentication performed by the agent system, it is allowed to select a combination of one or more of the plurality of authentication processes depending on the security level required in the service providing system. This makes it possible to perform the authentication in a highly flexible manner which allows it to control the execution of information processing performed by the noncontact IC card module regardless of the type of the portable communication terminal, and thus it is possible to realize the data communication system in a highly flexible fashion.

The authentication unit may receive a selection command specifying a combination of one or more of the plurality of the authentication processes and may perform the combination of the authentication processes specified by the received selection command. By performing the authentication in accordance with the selection command received from the service providing system or the agent system, it becomes possible to perform the authentication in a flexible and versatile manner.

The communication process performed by the communication unit may be a process of making the noncontact IC card module perform a writing process or a reading process.

The authentication unit may receive a selection command specifying one or both of two processes including a process of encrypting data to be read in the reading process and a process of adding an electronic signature produced based on the data to the data, the authentication unit may perform the one or both processes according to the received selection command.

The authentication unit may receive a selection command specifying one or both of two processes including a process of decrypting encrypted data to be written in the writing process and a process of verifying the validity of the data based on an electronic signature added to the data, and the authentication unit may perform the one or both processes according to the received selection command.

The communication between the service providing system and the agent system may be performed via the portable communication terminal.

The first client authentication process may be a challenge response authentication process in which a challenge code is transmitted to the portable communication terminal which in turn produces a response based on the challenge code and the granted license information and returns the resultant response, and the authentication is performed based on the received response. Note that the first client authentication process may be performed in another way. For example, the first client authentication process may be performed based on a received response produced based on the challenge code, the granted license information, and the client authentication key.

The portable communication terminal may be a portable telephone. This makes it possible that the agent system can perform the authentication and can control the information process executed by the noncontact IC card module regardless of the carrier of the type of the portable telephone.

According to another aspect of the invention, there is provided an agent system server adapted to, for a service providing server, perform a communication process with a noncontact IC card module, the service providing server being adapted to provide a service via information processing performed by the noncontact IC card module included in a portable communication terminal. The agent system server includes a receiving unit, an authentication unit, a decision unit, and a communication unit. The receiving unit is adapted to receive granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information. The authentication unit is adapted to perform, based on the granted license information received from the portable communication terminal, a combination of one or more of a plurality of authentication processes including a system authentication process to authenticate the service providing system based on the system authentication key, a first client authentication process to authenticate the portable communication terminal based on the client authentication key, and a second client authentication process to authenticate the portable communication terminal based on identification information identifying the portable communication terminal. The decision unit is adapted to, after the authentication by the authentication unit is completed, determine whether to permit communication or not, based on the license described in the granted license information, and the communication unit is adapted to, if communication is permitted by the decision unit, perform the communication process with the noncontact IC card module.

In this agent system server, the receiving unit receives granted license information transmitted from a portable communication terminal, and the authentication unit performs, based on the granted license information, a combination of one or more of the plurality of authentication processes to verify the validity of the service providing system and the portable communication terminal. If the authentication is successfully passed and permission in terms of communication is granted, the communication unit and the noncontact IC card module included in the portable communication terminal perform the communication process. In the above-described authentication performed by the agent system server, it is allowed to select a combination of one or more of the plurality of authentication processes depending on the security level required in the service providing server. This makes it possible to perform the authentication in a highly flexible manner which allows it to control the execution of information processing performed by the noncontact IC card module regardless of the type of the portable communicating terminal.

The authentication unit may receive a selection command specifying a combination of one or more of the plurality of the authentication processes and may perform the one of or the combination of the authentication processes specified by the received selection command.

According to another aspect of the present invention, there is provided a computer program that allows a computer to function as an agent system server adapted to, for a service providing server, perform a communication process with a noncontact IC card module, the service providing server being adapted to provide a service via information processing performed by the noncontact IC card module included in a portable communication terminal. The computer program includes a receiving module, an authentication module, a decision module, and a communication module. The receiving module is adapted to receive granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information. The authentication module is adapted to perform, based on the granted license information received from the portable communication terminal, a combination of one or more of a plurality of authentication processes including a system authentication process to authenticate the service providing server based on the system authentication key, a first client authentication process to authenticate the portable communication terminal based on the client authentication key, and a second client authentication process to authenticate the portable communication terminal based on identification information identifying the portable communication terminal. The decision module is adapted to, after the authentication is completed, determine whether to permit communication or not, based on the license described in the granted license information, and the communication module is adapted to, if communication is permitted by the decision module, perform the communication process with the noncontact IC card module.

According to another aspect of the present invention, there is provided a data communication method for an agent system server to, for a service providing server, perform a communication process with a noncontact IC card module, the service providing server being adapted to provide a service via information processing performed by the noncontact IC card module included in a portable communication terminal. The data communication method includes the steps of receiving granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information, and the data communication method further includes the steps of performing, based on the granted license information received from the portable communication terminal, a combination of one or more of a plurality of authentication processes including a system authentication process to authenticate the service providing server based on the system authentication key, a first client authentication process to authenticate the portable communication terminal based on the client authentication key, and a second client authentication process to authenticate the portable communication terminal based on identification information identifying the portable communication terminal, after the authentication step is completed, determining whether to permit communication or not, based on the license described in the granted license information, and if communication is permitted in the determination step, performing the communication process with the noncontact IC card module.

### Brief Description of the Drawings

[Fig. 1] Fig. 1 is a schematic diagram illustrating, in a simplified fashion, a data communication system according to an embodiment of the present invention;
[Fig. 2] Fig. 2 is a block diagram illustrating, in a simplified fashion, a service providing system included in a data communication system according to an embodiment of the present invention;
[Fig. 3] Fig. 3 is a diagram illustrating, in a simplified manner, a process performed by a license acquisition unit to produce granted license information according to an embodiment of the present invention;
[Fig. 4] Fig. 4 is a block diagram illustrating, in a simplified manner, a construction of a portable communication terminal according to an embodiment of the present invention;
[Fig. 5] Fig. 5 is a diagram illustrating, in a simplified fashion, an example of an encryption process performed by a response generation module according to an embodiment of the present invention;
[Fig. 6] Fig. 6 is a diagram illustrating, in a simplified manner, a selection screen for selecting one or more authentication processes according to an embodiment of the present invention;

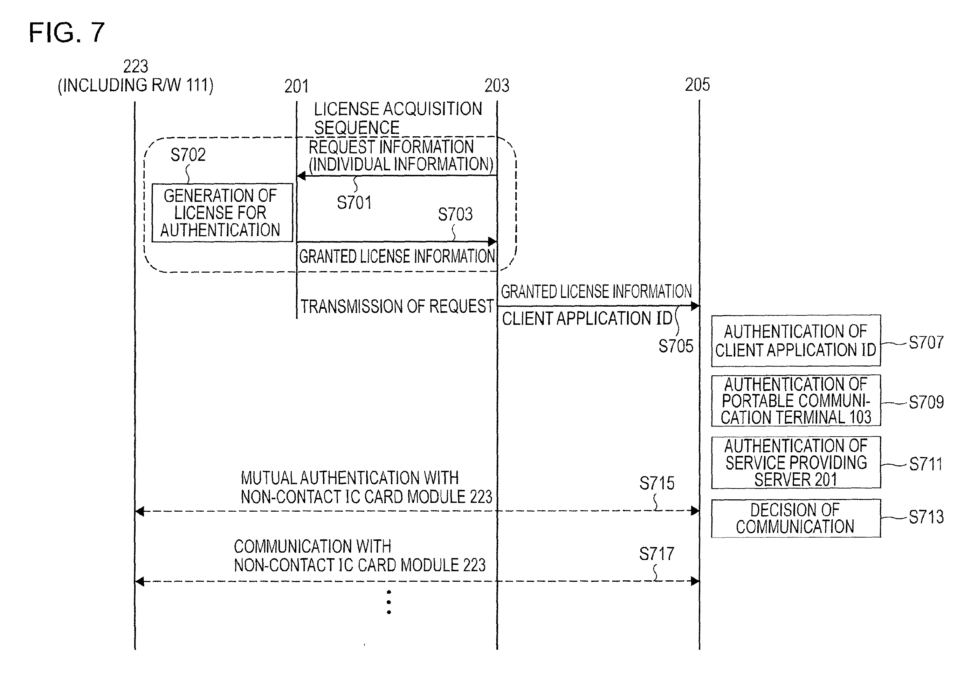

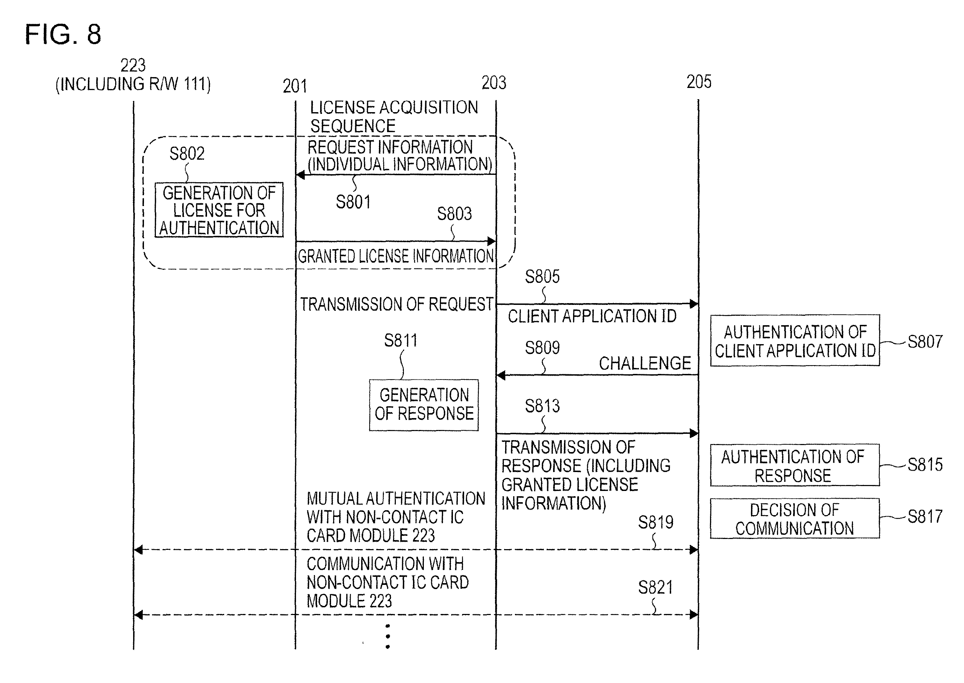

[Fig. 7] Fig. 7 is a sequence diagram showing authentication processes performed by a system authentication unit, a portable communication terminal authentication unit, and an ID authentication unit, and also showing a communication process with a noncontact IC card module according to an embodiment of the present invention; [Fig. 8] Fig. 8 is a sequence diagram illustrating, in a simplified fashion, authentication processes performed by a challenge response authentication unit and an ID authentication unit and also illustrating a communication process with a noncontact IC card module, according to an embodiment of the present invention;
[Fig. 9] Fig. 9 is a sequence diagram illustrating, in a simplified manner, a writing process to write data into a noncontact IC card module according to an embodiment of the present invention; and
[Fig. 10] Fig. 10 is a sequence diagram illustrating, in a simplified manner, a reading process to read data from a noncontact IC card module according to an embodiment of the present invention.

### Best Mode for Carrying Out the Invention

The present invention is described in further detail below with reference to preferred embodiments in conjunction with the accompanying drawings. In the following explanation and the accompanying drawings, parts which are substantially the same in function or structure will be denoted by the same reference numerals. Such parts will be explained only once and a duplicated explanation will not be given.

### Data Communication System

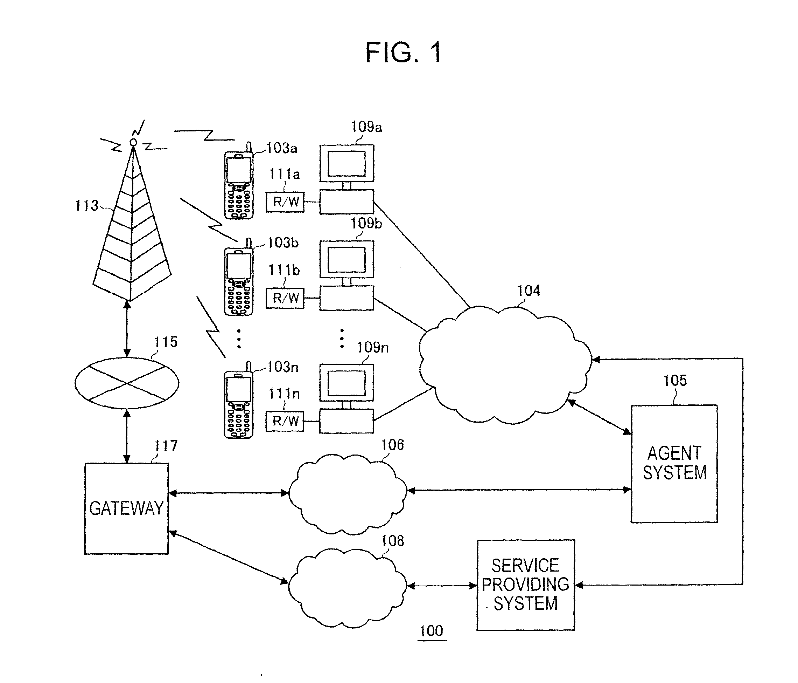

First, referring to Fig. 1, a data communication system 100 according to an embodiment of the present invention is described below. Fig. 1 is a diagram illustrating, in a simplified fashion, an example of a configuration the data communication system 100 according to the present embodiment of the invention.

As shown in Fig. 1, the data communication system 100 includes a service providing system 101, an agent system 105, portable communication terminals 103 (103a, 103b,..., 103n), a communication network 104, a communication network 106, a communication network 108, information processing apparatus 109 (109a, 109b,..., 109n), reader/writer units (R/W) 111 (111a, 111b,..., 111n), a base station 113, a packet communication network 115, and a gateway 117.

The service providing system 101 is adapted to produce granted license information in response to a request from the portable communication terminal 103. The service providing system 101 is also adapted to produce a client application executed by portable communication terminals 103.

The service providing system 101 provides service to users of the portable communication terminals 103 by controlling information processing such as writing or reading of data performed by the noncontact IC card module.

For example, in a case in which the service provided by the service providing system 101 is to give points depending on the amount of money paid by users to purchase something, if purchase information is transmitted from the client application installed in the portable communication terminal 103 to purchase something via online network commerce, the client application requests the agent system 105 to store, in the noncontact IC card module, information indicating a point given depending on the price.

When the agent system 105 receives a request from a portable communication terminal 103, the agent system 105 has to authenticate the portable communication terminal 103 before the agent system 105 performs the requested process. In preparation for the authentication, the client application acquires a part (for example, sage license information) or all of granted license information from the service providing system 101. If the authentication is successfully passed, the agent system 105 allows the noncontact IC card module to store the data.

Specific examples of data stored by the noncontact IC card module include point data, and electronic money data. Hereinafter, various kinds of such data indicating valuable information associated with electronic commerce, such as data indicating a money value, stored in the noncontact IC card module will be referred to generically as electronic value information.

The service provider operates the service providing system 101 to produce and provide a client application installed on portable communication terminals 103.

The agent system 105 is a system that performs, for the service providing system, various processes including issuing or managing of a noncontact IC card module (a noncontact IC cards), registering or deleting of configuration information associated with the client application and the like in a storage region into or form the noncontact IC card module, reading of electronic value information stored in a storage region in the noncontact IC card module, and/or writing of electronic value information into the noncontact IC card module.

The agent system 105 performs information processing such as reading/writing of data from/to the noncontact IC card module, for the service providing system 101. That is, because the service providing system 101 cannot directly control the noncontact IC card module to perform such information processing, the control of any process performed by the noncontact IC card module is performed via the agent system 105.

Although in the present embodiment, as described above, it is assumed by way of example that the noncontact IC card module is included in the portable communication terminal 103, the noncontact IC card module is not limited to such a module, but the present invention may be applied to any device functioning as a noncontact IC card such as a separate type of noncontact IC card.

The agent system 105 produces one system authentication key for each service providing system 101 so that information can be transmitted in a secure manner between each service providing system and the agent system 105. The produced system authentication key is stored in both the agent system 105 and the service providing system 101. Note that the system authentication key may be produced not by the agent system 105 but by the service providing system 101.

Although in the present embodiment, by way of example, it is assumed that one system authentication key is produced for each service providing system 101, system authentication keys may be produced in another way. For example, one system authentication key may be produced for each client application provided by each service providing system 101.

Since the system authentication key is secret information whose confidentiality should be securely kept, it is desirable to store the system authentication key in a high-security storage unit that is protected from tampering. The system authentication key is used for mutual authentication between the agent system 105 and the service providing system 101.

As for system authentication keys, keys according to an asymmetric key cryptosystem such as RSA or according to a symmetric key cryptosystem such as DES or AES, or keys according to any other cryptosystem may be employed. In a case of a symmetric key, it is required that providing of the key should be performed in a very secure manner. To this end, the key is sent not via a communication network but via certified mail or the like that allows the key to be sent in a very secure manner.

In a state in which the agent system 105 already has information associated with the service providing system 101 and the system authentication key, when a portable communication terminal 103 executes a client application, If the agent system 105 authenticates the portable communication terminal 103 positively, the agent system 105 accesses, for the service providing system 101, the noncontact IC card module included in the portable communication terminal 103.

Herein, the term "access" is used to describe wide variety of processes performed via a communication network, such as using of a system, connecting to a system or a server, reading of a file, saving of a file, deleting of a file, and modifying of a file.

Each of one or more portable communication terminals 103 (103a, 103b,..., 103n) is capable of communicating with each other via the base station 113 and is capable of accessing the service providing system 101 via the base station 113, the packet communication network 115, and the gateway 117.

For example, each portable communication terminal 103 is capable of executing a client application having a browsing function, receiving web data in an HTML form or the like from a site with a URL address specified by a user, and displaying the received web data on a display screen.

In addition to the communication capability and the browsing capability, the portable communication terminal 103 also has a noncontact IC card module (a noncontact IC card) capable of transmitting/ receiving data via the R/W 111 and via a wireless communication channel.

When the portable communication terminal 103 is located close to the reader/writer 111 or the like, the noncontact IC card module is capable of wirelessly transmitting data stored in the noncontact IC card module to, for example, the agent system 105 via the reader/writer 111.

The portable communication terminal 103 has an authentication key (a client authentication key) used in mutual authentication with the agent system 105 when the portable communication terminal 103 accesses the agent system 105. Since the client authentication key is secret information whose confidentiality should be securely kept, it is desirable to store the client authentication key in a high-security storage unit that is protected from tampering.

As for client authentication keys, keys according to an asymmetric key cryptosystem such as RSA or according to a symmetric key cryptosystem such as DES or AES, or keys according to any other cryptosystem may be employed. In a case of a symmetric key, it is required that providing of the key should be performed in a very secure manner. To this end, the key is sent not via a communication network but via mail or the like that allows the key to be sent in a very secure manner.

Each portable communication terminal 103 has client application identification information identifying a client application (the details of which will be described later) stored in the portable communication terminal 103. The agent system 105 may authenticate the portable communication terminal 103 based on the client application identification information. Note that the portable communication terminal 103 does not necessarily need to have such client application information.

In the data communication system 100 according to the present embodiment of the invention, as shown in Fig. 1, connections between the service providing system 101 and the portable communication terminals 103 are made via the communication network 108, and connections between the portable communication terminals 103 and the agent system 105 are made via the communication network 106. That is, there is no network that directly connects the agent system 105 and the service providing system 101, and thus the agent system 105 and the service providing system 101 cannot directly communication with each other. In other words, the agent system 105 and the service providing system 101 can communication with each other only via one of portable communication terminal 103.

More specifically, the service providing system 101 can transmit information to the agent system 105 indirectly via a communication process performed by the client application of the portable communication terminal 103.

Note that in the present embodiment, the method of communication between the portable communication terminal 103 and the service providing system 101 via the communication network 104 is not limited to communication using a TCP/IP protocol such as HTTP or HTTPS, but the present invention may also be applied to any communication method/means available for the portable communication terminal 103, such as communication using a noncontact IC card, a contact IC card, an infrared ray, a two-dimensional bar code such as a QR code, or an electronic mail (SMTP). Such communication means is useful in particular when granted license information or the like is transmitted from the service providing system 101 to the client application of the portable communication terminal 103.

In the present embodiment, the communication between each portable communication terminal 103 and the agent system 105 via the communication network 106 may be performed, for example, using TCP/IP such as HTTP or HTTPS.

### Service Providing System 101

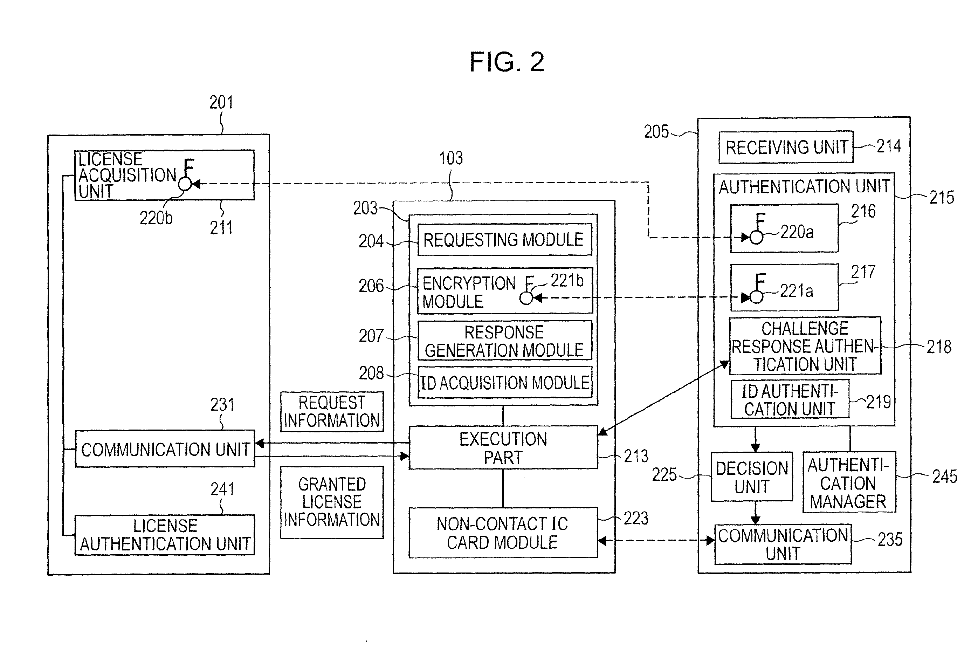

Now, referring to Fig. 2, the service providing system 101 according to the present embodiment of the invention is described below. Fig. 2 illustrates, in a simplified manner, the service providing system included in the data communication system according to the present embodiment of the invention.

As shown in Fig. 2, the service providing system 101 includes a service providing server 201. As described above, the service providing server 201 can transmit and receive data to and from the portable communication terminal 103 via the communication network 108.

As shown in Fig. 2, the service providing server 201 also includes a license acquisition unit 211, a communication unit 231, and a license authentication unit 241.

If the license acquisition unit 211 receives request information from one of the portable communication terminals 103, the license acquisition unit 211 acquires information indicating the license granted to the portable communication terminals 103 from a license database (not shown) based on the request information, and produces granted license information.

As described above, the license acquisition unit 211 has the system authentication key 220b corresponding to the system authentication key 220a possessed by the agent system 105.

The request information includes information that identifies the portable communication terminal 103. The details of the identification information will be described later. The license acquisition unit 211 acquires information indicating the license based on the identification information included in the request information, and produces granted license information using the system authentication key 220b.

The communication unit 231 is capable of communicating with the portable communication terminal 103 via the communication network 108, the gateway 117, the packet communication network 115, and the base station 113. This allows the communication unit 231 to receive data such as request information from the portable communication terminal 103 and transmit data such as granted license information to the portable communication terminal 103.

### License Acquisition Unit 211

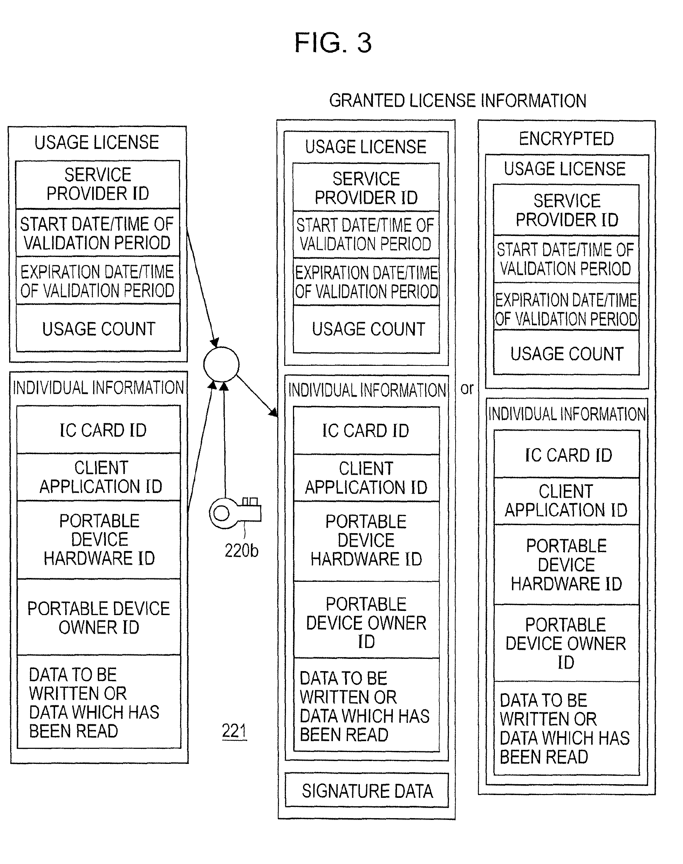

Now, referring to Fig. 3, a process performed by license acquisition unit to produce the granted license information according to the present embodiment is described below. Fig. 3 is a diagram illustrating, in a simplified manner, the process performed by license acquisition unit to produce the granted license information according to the present embodiment.

As shown in Fig. 3, if the license acquisition unit 211 receives input usage license information and individual information, the license acquisition unit 211 produces granted license information including a set of usage license information and individual information. Furthermore, the license acquisition unit 211 encrypts the granted license information using the system authentication key 220b produced beforehand between the agent system 105 and the service providing system 101.

Instead of encrypting the granted license information using the system authentication key 220b, the license acquisition unit 211 may attach, to the granted license information, an electronic signature produced by, for example, calculating the hash value of the produced granted license information and encrypting the calculated hash value using the system authentication key 220b.

The individual information described above is included in the request information transmitted from the portable communication terminal 103. The individual information includes, for example, an IC card ID identifying the noncontact IC card module and the client application ID identifying the client application stored in the portable communication terminal 103.

The usage license information is information coupled with the individual information included in the request information received from the portable communication terminal 103, and a judgment as to whether provision of service should be permitted or not is made based on this usage license information.

For example, if a client application is stored in the portable communication terminal 103 and the client application is registered in the agent system 105, usage license information indicating the condition/restriction in terms of provision of service is produced by the service providing system 101.

More specifically, the usage license information includes information indicating a validation period start date/time and a validation period expiration date/time, which define a period during which service is provided. The usage license information also includes information indicating the maximum number of times that a user is allowed to receive service during the valid usage period.

Note that the usage license information is not necessarily different for respective pieces of individual information. For example, when an ID "*" is assigned as the IC card ID for individual information for a particular group of users, the validation period start date/time and the validation period expiration date/time may be set equally for that group of users. In this case, all uses can receive service in the same way via their own noncontact IC card module.

Note that write data (which is data to be written into the noncontact IC card module) and read data (which is data read from the noncontact IC card module) included in the individual information is not necessary in the authentication process in which a judgment is made as to whether the portable communication terminal 103 is authorized to receive service, although write data or read data is necessary in a write process or a read process in which the write data or the read data is written or read by the agent system 105 into or from the noncontact IC card module.

Although in the present embodiment, it is assumed by way of example that the license acquisition unit 211 produces granted license information based on input usage license information and individual information, the granted license information may be produced in a different way. For example, the license acquisition unit 211 may produce granted license information so as to include only usage license information. That is, the granted license information may include a part of or all of items of the usage license information and the individual information. In the following description, there is no particular restriction on the items included in the granted license information (that is, it may include a part of or all of items of the usage license information and the individual information) unless explicitly stated otherwise.

### Portable Communication Terminal 103

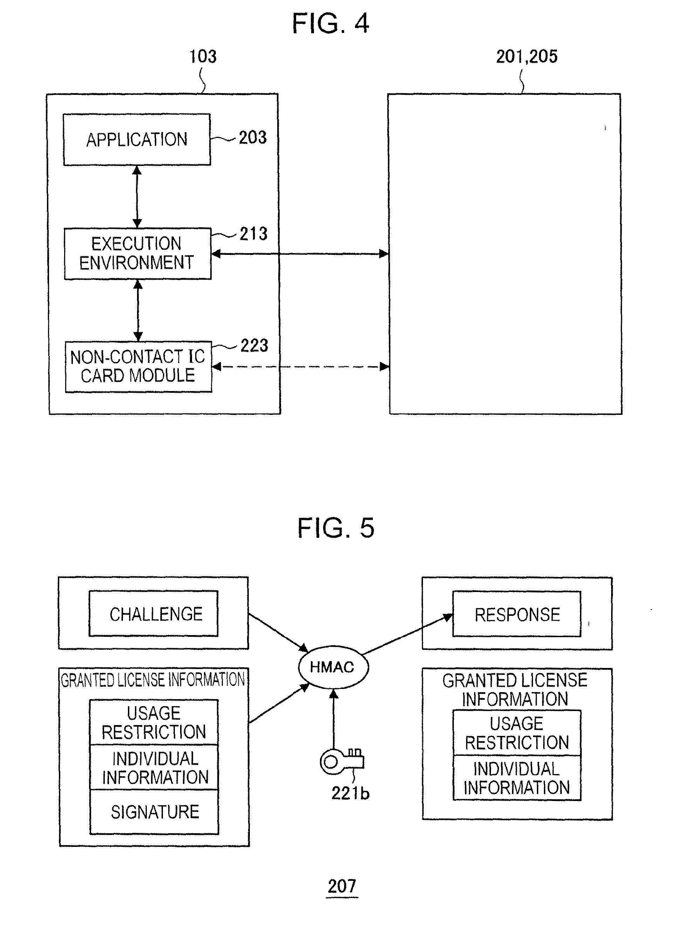

Now, referring to Fig. 4, the portable communication terminal 103 according to the present embodiment of the invention is described below. Fig. 4 is a block diagram showing an example of a structure of the portable communication terminal 103 according to the present embodiment of the invention.

As shown in Fig. 4, the portable communication terminal 103 includes application software 203 that is stored in memory or an HDD, an execution part 213 that performs processing in accordance with a command from the application software 203, and a noncontact IC card module 223.

The application software 203 includes one or more client applications (such as those described above) produced by the service providing system 101. If the portable communication terminal 103 receives a client application from the service providing server 201 via the communication network or the like, the portable communication terminal 103 stores the received client application in a memory such as an EEPROM memory or an HDD in an executable manner.

Although In the present embodiment it is assumed by way of example that the application software is software including one or more program modules of components, the application software does not necessarily need to be software, but the application software may be realized in the form of hardware such as a circuit including one or more circuit elements. In the case in which the application software is in the form of hardware, the service providing system 101 delivers the application software 203 to a user by means other than a communication network, and the user installs the received application software 203 into his/her portable communication terminal 103.

When the client application is stored, a client application ID that is provided by the service providing server 201 and that identifies the client application may also be stored in the memory or the HDD. The client application ID is used in the authentication process when the portable communication terminal 103 accesses the agent system 101.

The execution part 213 is software including one or more modules preinstalled in the portable communication terminal 103. If the execution part 213 receives a request such as a communication process request from the application software 203, the execution part 213 accesses a server via a communication network and transfers data received from the server to the application software 203.

As for the noncontact IC card module 223, a noncontact IC card or a device such as a semiconductor device having a capability of functioning as a noncontact IC card may be employed. The noncontact IC card has an antenna and is capable of performing a short-range wireless communication via the antenna to write or read data into or form a storage unit disposed in the noncontact IC card.

In a case where communication is performed between the portable communication terminal 103 and a server (the service providing server 201 or agent system server 205), the application software 203 of the portable communication terminal 103 first issues a communication request to the execution part 213.

In the data communication system 100 according to the present embodiment, although it is assumed by way of example that, as described above, when communication is performed between the portable communication terminal 103 and a server, the communication is started in response to a trigger generated by the portable communication terminal 103, communication may be started in another way.

If the execution part 213 receives the request to communicate with the server from the application software 203, the execution part 213 tries to access the server via a communication network. In the accessing, for the purpose of security, data encryption or addition of an electronic signature is performed so that the server can authenticate the portable communication terminal 103 based on the encryption or the electronic signature, as will be described in further detail later.

If the authentication in terms of the portable communication terminal 103 by the server is successfully passed, a connection is established between the execution part 213 and the server. In a case in which the issued communication request is to execute an information process (communication process) on the noncontact IC card module 223, mutual authentication is performed between the server (agent system server 205) and the noncontact IC card module 223, and the communication process is started after the mutual authentication is successfully passed.

Now, referring to Fig. 2, the application software 203 installed in the portable communication terminal 103 is described in further detail below.

As shown in Fig. 2, the application software 203 includes a requesting module 204, an encryption module 206, a response generation module 207, and an ID acquisition module 208.

The requesting module 204 generates request information to communicate with the agent system server 205 or the service providing server 201 and transmits the generated request information to the execution part 213.

When the request information is produced, the requesting module 204 acquires Individual information from the storage unit (not shown) such as the HDD and describes it in the request information.

The encryption module 206 encrypts data using the client authentication key 221a corresponding to the client authentication key 221b possessed by the agent system server 205. If the encrypted data can be decrypted by the portable communication terminal authentication unit 217 at the site of the agent system server 205 by using the client authentication key 221a corresponding to the client authentication key 221b, it is determined in the authentication process that the portable communication terminal 103 is an authorized terminal.

The response generation module 207 has at least a capability of generating a response according to the challenge response method. The response generation module 207 acquires a challenge code from the agent system server 205 and generates a response based on the acquired challenge code (or a seed or the like). The response is generated by calculating a hash value of the challenge code. Note that the response may be generated in another way. For example, the response may be generated by first adding a password given by a user to the challenge code and then calculating a hash value the result.

The response generation module 207 encrypts a set of the granted license information and the response by using the client authentication key 221b possessed by the encryption module 206, as will be described in further detail later.

The ID acquisition part 208 acquires the client application ID identifying the application software 203 from the storage unit. In a case in which the client application ID is not stored in the storage unit, the ID acquisition part 208 may generate a message indicating that there is no client application ID, which will be displayed on a display screen.

### Response Generation Module 207

Now, referring to Fig. 5, the encryption process performed by the response generation module 207 according to the present embodiment of the invention is described below. Fig. 5 is a diagram illustrating, in a simplified fashion, an example of the encryption process performed by response generation module 207 according to the present embodiment.

As shown in Fig. 5, if the response generation module 207 acquires the input challenge (challenge code), the granted license information, and the client authentication key 221b, the response generation module 207 calculates the hash value (HMAC (Hashing for Message Authentication Code)) thereof using a hash function.

The resultant hash value (response) is transmitted, together with the usage license information (such as that shown in Fig. 5) included in the granted license information, by the execution part 213 to the agent system 105 via the communication network 106. In this case, of various kinds of information included in the granted license information, only the usage license information is transmitted via the communication network 106. Note that the individual information stored in the storage unit (not shown) of the portable communication terminal 103 is transmitted beforehand or separately from the portable communication terminal 103 to the agent system 105. Of various items of the individual information received from the portable communication terminal 103, a part of or all of the individual information (such as the client application ID) may be held in the agent system 105.

Although in the data communication system 100 according to the present embodiment of the invention, the response generation module 207 calculates the hash value in the above-described manner, the hash value may be calculated in another way. For example, the response generation module 207 may calculate the hash value based on the challenge and the license information. The calculated hash value is then encrypted by the response generation module 207 using the client authentication key 221b and thus the response in a final form is obtained. The generated response is transmitted, together with the usage license information (such as that shown in Fig. 5) included in the granted license information, by the execution part 213 to the agent system 105 via the communication network 106. The agent system 105 determines the hash value (the response) in a similar manner from the challenge, the usage license information included in the granted license information, and the individual information, decrypts the received response using the client authentication key 221a of the sender, and checks whether both responses are identical to each other.

The input challenge information is a challenge code generated by the agent system server 205 according to the challenge response method as described above.

Of the granted license information input to the response generation module 207, a part thereof (the usage license information shown in Fig. 5) is transmitted by the execution part 213 to the agent system 105 via the communication network 106 together with or separately from the response, for use in the authentication process.

### Agent System 105

Now, referring to Fig. 2, the agent system 105 according to the present embodiment of the invention is described below. Fig. 2 is a diagram illustrating, in a simplified manner, the data communication system according to the present embodiment of the invention.

As shown in Fig. 2, the agent system 105 includes the agent system server 205. As described above, the agent system server 205 can transmit and receive data to and from portable communication terminals 103 via the communication network 106 and also can communicate with the noncontact IC card module included of each portable communication terminal 103 via the communication network 104 and the R/W 111.

As shown in Fig. 2, the agent system server 205 includes a receiving unit 214, an authentication unit 215, a decision unit 225, a communication unit 235 and an authentication process manager 245. If the communication unit 235 receives a command from the decision unit 225, the communication unit 235 communicates with the noncontact IC card module 223 via the execution part 213 of the portable communication terminal 103.

The information indicating the details of the communication process, such as a process of writing data at a particular address in an storage area of the storage unit disposed in the noncontact IC card module 223, or a process of reading data from a particular address in the storage area of the storage unit disposed in the noncontact IC card module 223, is transmitted from the portable communication terminal 103.

The authentication unit 215 includes a system authentication unit 216 that authenticates the service providing system 101 based on the system authentication key 220a, a portable communication terminal authentication unit 217 that authenticates clients (portable communication terminals 103), a challenge response authentication unit 218 that authenticates portable communication terminals 103 by the challenge response method, and an ID authentication unit 219 that authenticates the portable communication terminals 103 based on client application IDs.

When the system authentication unit 216 can successfully decrypt, using the system authentication key 220a, data encrypted by the service providing server 201, it is possible to verify the validity of the service providing server 201.

Similarly, when the portable communication terminal authentication unit 217 can successfully decrypt the data encrypted by the portable communication terminal 103 by using the client authentication key 221a, it is determined that the portable communication terminal 103 is an authorized terminal.

If the challenge response authentication unit 218 receives a request for a challenge from the portable communication terminal 103, the challenge response authentication unit 218 generates the challenge and transmits the generated challenge to the portable communication terminal 103. Furthermore, the challenge response authentication unit 218 generates a response for comparison by determining the hash value from the challenge and the granted license information separately received. If the challenge response authentication unit 218 receives the response from the portable communication terminal 103, the challenge response authentication unit 218 checks whether the received response is identical to the generated comparison response. If they are identical to each other, it is determined that the received response is valid and thus the portable communication terminal 103 is determined as an authorized terminal.

If the ID authentication unit 219 receives a client application ID from a portable communication terminal 103, the ID authentication unit 219 checks whether the client application ID has been registered in the client application ID database (not shown).

If the applicable client application ID is detected in the client application ID database, it is determined that the portable communication terminal 103 that is the sender of the client application ID is valid. Note that all registered client application IDs are stored in the client application ID database. The client application ID may be encrypted and transmitted from the service providing system 101 to the agent system 105 via a portable communication terminal 103.

The decision unit 225 determines whether to permit provision of service, according to the result of the authentication performed by the authentication unit 215 and also according to the usage count, the validation period start date/time, and the validation period expiration date/time described in the granted license information.

If the authentication process manager 245 receives selection information specifying selected one or more of the plurality of authentication processes, for example, from the console internally connected to the agent system server 205 or from an information processing apparatus used by a manager of the service providing system, the authentication process manager 245 sends to the authentication unit 216 a command (an authentication process selection command) indicating that the selected one or more of the plurality of authentication processes specified by the selection information.

More specifically, before the authentication unit 215 performs the authentication, the authentication unit 215 issues an inquiry command to the authentication process manager 245. In response to the inquiry command, the authentication process manager 245 sends the authentication process selection command to the authentication unit 215. In accordance with the authentication process selection command, the authentication unit 215 performs the authentication.

That is, if an inquiry is received from the authentication unit 215, the authentication process manager 245 commands the authentication unit 215 to perform the combination of the authentication processes specified in the selection information. Note that the selection information is sent from a console connected to the service providing system 101 or the agent system 105.

In accordance with the command issued by the authentication process manager 245, authentication is performed by at least one of the system authentication unit 216 included in the authentication unit 215, the portable communication terminal authentication unit 217, the challenge response authentication unit 218, and the ID authentication unit 219.

In order to issue a command associated with the authentication to the authentication unit 215, the authentication process manager 245 has an authentication process database (not shown) in which the service providing system ID identifying the service providing system 101 and the selection information corresponding to the service providing system 101 are registered.

If the authentication process manager 245 receives selection information from the console, the authentication process manager 245 detects the service providing system ID described in the selection information and updates corresponding selection information stored in the authentication process database.

Although in the present embodiment, by way of example, it is assumed that the respective types of authentication units (216, 217, and 218) included in the authentication unit 215 perform authentication by checking whether encrypted data can be decrypted, the authentication may be performed in a different manner. For example, in a case in which an electronic signature is attached to data, each authentication unit (216, 217, or 218) may generate an electronic signature based on the data and may perform authentication by checking whether the generated electronic signature is identical to the electronic signature attached to the data.

### Combination of Authentication Processes

The combination of authentication processes specified by the selection information can be modified as required. There are a plurality of types of authentication processes that are executable, and it is possible to select an arbitrary combination of one or more of the plurality of types of authentication processes executable by the agent system 105.

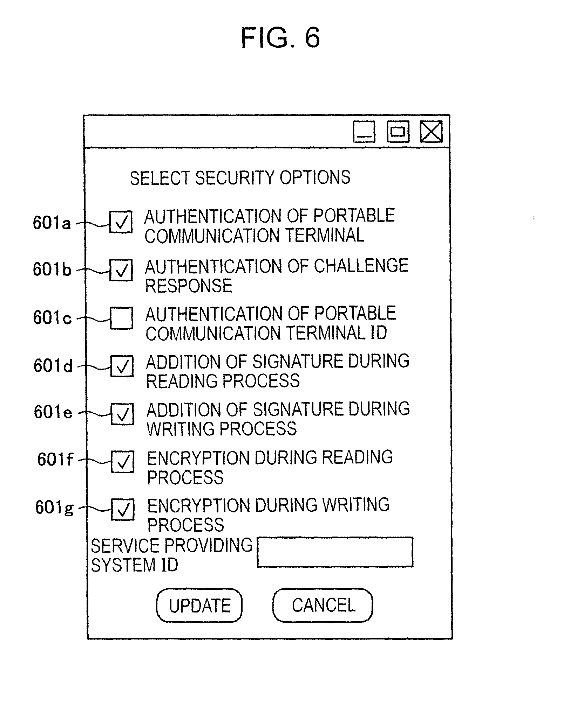

Now, referring to Fig. 6, a selection screen for selecting one or more of the plurality of authentication processes and inputting information indicating the selected one or more of the plurality of authentication processes to the authentication process manager 245 via the console or the like is described. Fig. 6 illustrates, in a simplified manner, the selection screen for selecting one or more from the plurality types of authentication processes according to the present embodiment of the invention.

The selection screen shown in Fig. 6 for selecting one or more from the plurality of the authentication processes is displayed on a console or the like connected to the agent system server 205 via a LAN or the like. Alternatively, the selection screen may be displayed on an information processing apparatus used by a manager of the service providing system 101. In this case, a login password or the like is input to the information processing apparatus used by the manager, and the agent system server 205 authenticates the information processing apparatus based on the input login password.

As shown in Fig. 6, on the selection screen, various checkboxes are displayed such as a checkbox 601a for selecting an authentication process performed by the portable communication terminal authentication unit 217 to authenticate portable communication terminals 103 and a checkbox 601b for selecting an authentication process performed by the challenge response authentication unit 218. It is possible to specify an arbitrary combination of one or more of the plurality of types of authentication processes selected by checking corresponding checkboxes 601 depending on a required security level.

By clicking one or more checkboxes 601, authentication processes to be performed by the agent system 105 are specified. In the specific example of shown in Fig. 6, a check box 601a, a check box 601b, a check box 601d, and a check box 601e are selected.

If an Update button is clicked, selection information is produced and transmitted from the console to the authentication process manager 245. By specifying proper authentication processes in the above-described manner, it becomes possible for the agent system 105 to properly perform authentication in the manner specified by the service providing system 101. By using a combination of a plurality of authentication processes, it becomes possible for the service providing system 101 to arbitrarily set the security level as required.

When addition of an electronic signature in the reading process is selected by checking the checkbox 601d, the agent system 105 adds an electronic signature to data read from the noncontact IC card module 223 to prevent the data from being tampered with. Note that each authentication unit 215 has this capability.

When addition of an electronic signature in the writing process is selected by checking the checkbox 601e, the service providing system 101 adds an electronic signature to data to be written into the noncontact IC card module 223 to prevent the data from being tampered with. When this authentication process is selected, the agent system 105 generates an electronic signature from received data and checks whether the generated electronic signature is identical to the received electronic signature. Note that each authentication unit 215 has this capability of checking the validity of the data to be written into the noncontact IC card module 223.

When encryption in the reading process is selected by checking the checkbox 601f, the agent system 105 encrypts data read from the noncontact IC card module 223 to protect the data from tapping. Note that each authentication unit 215 has this capability. When this authentication process is selected, the service providing system 101 has to decrypt the data encrypted by the agent system 105.

When encryption in the writing process is selected by checking the checkbox 601g, the service providing system 101 encrypts data to be written into the noncontact IC card module 223 to protect the data from tapping. When this authentication process is selected, the agent system 105 has to decrypt the received data using the particular system authentication key. Each authentication unit 215 has the capability of decrypting the data to be written into the noncontact IC card module 223.

Communication Process with a Noncontact IC Card Module Now, referring to Fig. 7, a communication process with a noncontact IC card module, including an authentication process, performed by the authentication unit 215 according to the present embodiment of the invention is described. Fig. 7 is a sequence diagram illustrating, in a simplified fashion, authentication processes performed by the system authentication unit 216, the portable communication terminal authentication unit 217, and the ID authentication unit 219 and also illustrating a communication process with a noncontact IC card module.

As shown in Fig. 7, when authentication associated with a portable communication terminal 103 is performed, the application software 203 first accesses the service providing server 201 (step S701). Note that when the application software 203 has already license information indicating a granted license, and if the granted license information is valid, the application software 203 does not access the service providing server 201.

When the application software 203 accesses the service providing server 201 via the execution part 213, URL or the like is employed to indicate the address of the service providing server 201.

If the service providing server 201 receives individual information from the application software 203, the service providing server 201 produces granted license information as described above (step S702), and transmits the resultant granted license information to the application software 203 of the portable communication terminal 103 that issued the request (step S703). The application software 203 transfers the received granted license information to the agent system server 205 through the execution part 213 (step S705). Because the granted license information is not directly transmitted to the agent system server 205 from the service providing system 101, high independence in terms of the security of both servers can be achieved.

Although in the present embodiment, in the transmission process (step S705), the client application ID acquired by the ID acquisition module 208 is also transmitted together, it is not necessarily required to transmit the client application ID. For example, in a case in which the ID authentication process using the client application ID is not selected, it is not necessary to send the client application ID.

If the agent system server 205 receives granted license information and the client application ID from the portable communication terminal 103, an ID authentication process is first performed by the ID authentication unit 219 based on the received client application ID (step S707).

More specifically, in the ID authentication process by ID authentication unit 219, it is checked whether the received client application ID is identical to the client application ID that was stored beforehand in the database (the client application database) of the agent system server 205 when the client application was registered as the application software 203.

After the ID authentication process (in step S707) is completed, the authentication process associated with the portable communication terminal 103 is performed by the portable communication terminal authentication unit 217 (step S709). More specifically, authentication is performed by checking whether it is possible to successfully perform decryption using the client authentication key 221a corresponding to the client authentication key 221b used by the portable communication terminal 103 to encrypt the granted license information. If the portable communication terminal authentication unit 217 succeeds in correctly performing decryption, the portable communication terminal 103 is regarded as an authorized terminal.

Although in the data communication system 100 according to the present embodiment of the invention, it is assumed, by way of example, that the authentication associated with the portable communication terminal 103 is performed in the above-described manner (in step S709), the authentication of the portable communication terminal 103 may be performed in a different way. For example, the authentication of the portable communication terminal 103 may be performed (in step S709) when the authentication according to the challenge response method is not performed. In this case, the authentication process can be simplified and can be performed in a more efficient manner.

Although in the data communication system 100 according to the present embodiment of the invention, it is assumed by way of example that authentication associated with the portable communication terminal 103 is performed (in step S709), it is not necessarily required to perform the authentication associated with the portable communication terminal 103 (in step S709).

If the authentication process (step S709) associated with the portable communication terminal 103 by the portable communication terminal authentication unit 217 is completed, an authentication process associated with the service providing system 101 is performed by the system authentication unit 216, based on the decrypted granted license information (step S711).

The system authentication unit 216 performs authentication by checking whether it is possible to successfully decrypt the granted license information decrypted in the authentication process (S709) by the portable communication terminal authentication unit 217, by using the system authentication key 220a corresponding to the system authentication key 220b used in the encryption performed by the service providing system 101. If the system authentication unit 216 succeeds in correctly performing the decryption, it is determined that the service providing server 201 is valid.

Although in the present embodiment, it is assumed by way of example that the system authentication unit 216 and the portable communication terminal authentication unit 217 included in the authentication unit 217 perform authentication by checking whether it is possible to successfully decrypt encrypted data, the authentication may be performed in a different way. For example, in a case in which data includes an attached electronic signature, the system authentication unit 216 and the portable communication terminal authentication unit 217 may produce an electronic signature based on the data and may perform authentication by checking whether the generated electronic signature is identical to the electronic signature attached to the data.

After the authentication processes by the ID authentication unit 219, the portable communication terminal authentication unit 217, and the system authentication unit 216 are completed, the decision unit 225 determines whether to permit execution of the communication process with the noncontact IC card module 223 of the portable communication terminal 103 that has issued the request, based on the result of the authentication performed by the authentication unit 215 and based on the usage license information described in the granted license information (step 5713).

If the decision unit 225 grants permission to execute the communication process with the noncontact IC card module 223 (step S713), mutual authentication between the communication unit 235 and the noncontact IC card module 223 is performed via the communication network 106, the gateway 117, the packet communication network 115, the base station 113, and the execution part 213 of the portable communication terminal 103 (step S715). More specifically, in the mutual authentication, the communication unit 235 checks whether the IC card ID of the portable communication terminal 103 is identical to the IC card ID included in the granted license information.

Although in the present embodiment, it is assumed that the mutual authentication between the communication unit 235 and the noncontact IC card module 223 is performed via the communication network 106, the gateway 117, the packet communication network 115, the base station 113, and the execution part 213 of the portable communication terminal 103, the mutual authentication may be performed in a different way. For example, the mutual authentication between the communication unit 235 and the noncontact IC card module 223 may be performed via the reader/writer 111 (step S715).

If the mutual authentication between the communication unit 235 and the noncontact IC card module 223 is successfully completed (step S715), the communication unit 235 transmits, to the noncontact IC card module 223, information indicating the details of the communication process specified by the request received (in step S705) in the authentication process associated with the portable communication terminal 103 or received separately after the authentication process is completed, thereby performing the communication process with the noncontact IC card module 223 (step S717). Although in the present embodiment, the communication (in step S717) is performed in a secure manner using the encryption/decryption keys, it is not necessarily needed to perform the communication in such a manner.

If the noncontact IC card module 223 receives from the communication unit 235 communication process information indicating, for example, that point information "80" should be written in a storage area (for example, at an address "A") of the storage unit, the noncontact IC card module 223 writes the point information "80" at the address "A" in accordance with the communication process information. When the writing process is completed, response information indicating that the writing process is completed is sent to the communication unit 235. In a case where a further process is specified as the communication process, the specified process is executed.

Now, referring to Fig. 8, a communication process with a noncontact IC card module, including an authentication process, performed by the authentication unit 215 according to the present embodiment of the invention is described. Fig. 8 is a sequence diagram illustrating, in a simplified fashion, the authentication processes performed by the challenge response authentication unit 218 and the ID authentication unit 219 and also illustrating the communication process with the noncontact IC card module.

As shown in Fig. 8, to authenticate the portable communication terminal 103, the application software 203 first accesses the service providing server 201 (step S801). Note that when the application software 203 has already license information indicating a granted license, and if the granted license information is valid, the application software 203 does not access the service providing server 201.

If the service providing server 201 receives individual information from the application software 203, the service providing server 201 produces granted license information as described above (step S802), and transmits the resultant granted license information to the application software 203 of the portable communication terminal 103 that issued the request (step S803).

The application software 203 then accesses the agent system server 205 through the execution part 213 and requests the agent system server 205 to perform the authentication process (step S805). Although in the present embodiment, in this requesting process (step S805), the client application ID acquired by the ID acquisition module 208 is also transmitted together, it is not necessarily required to transmit the client application ID. For example, in a case in which the ID authentication process using the client application ID is not selected, it is not necessary to send the client application ID.

If the ID authentication unit 219 receives a client application ID from a portable communication terminal 103, the ID authentication unit 219 performs the ID authentication process based on the received client application ID (step S807).

If the ID authentication process by the ID authentication unit 219 is successfully completed, the challenge response authentication unit 218 produces a challenge code and transmits it to the portable communication terminal 103 via a communication network (step S809).

If the application software 203 receives the challenge code from the agent system server 205, the application software 203 produces a response based on the challenge code and the granted license information (step S811). The response has already been described above, and thus an explanation thereof is omitted herein.

The application software 203 transmits the response to the agent system server 205 via the execution part 213 (step S813). When the response is transmitted to the agent system server 205, the granted license information is also transmitted (step S813). Note that the granted license information may be transmitted separately.

If the challenge response authentication unit 218 receives the response, the challenge response authentication unit 218 produces a response from the challenge code already produced and the granted license information received from the portable communication terminal 103, in a similar manner to the response generation process performed by the response generation module 207.

In a case where the granted license information received from the portable communication terminal 103 has been encrypted by the portable communication terminal 103, the challenge response authentication unit 218 first decrypts the received granted license information using the client authentication key 221a and then produces the response.

On the other hand, in a case where the granted license information received from the portable communication terminal 103 has been encrypted by the service providing server 201, the challenge response authentication unit 218 first decrypts the received granted license information using the system authentication key 220a and then produces the response.

After the challenge response authentication unit 218 produces the response, the challenge response authentication unit 218 checks whether the response received from the portable communication terminal 103 is identical to the generated response. If the challenge response authentication unit 218 determines that the two responses are identical to each other, the challenge response authentication unit 218 determines that the portable communication terminal 103, which is the sender, and the service providing server 201 are both valid, and the authentication is completed.

If the authentication processes by the challenge response authentication unit 218 and the ID authentication unit 219 are completed, the decision unit 225 determines whether to permit execution of the communication process with the noncontact IC card module 223 of the portable communication terminal 103 that has issued the request, based on the result of the authentication performed by the authentication unit 215 and the usage license information included in the granted license information (step S817).

The decision unit 225 may request the portable communication terminal 103 via the communication unit 235 to supply the individual information included in the granted license information. If the execution part 213 of the portable communication terminal 103 receives the request for the individual information, the execution part 213 acquires the individual information and transmits it to the agent system server 205.

Note that the decision process performed by the decision unit 225 is not limited to the example described above. For example, as required, the decision unit 225 may also check whether a portable communication terminal hardware ID identifying the portable communication terminal 103 described in the granted license information is identical to a portable communication terminal hardware ID registered in the client application ID database. Data registered in the client application ID database has a data structure including items "client application ID", "portable device hardware ID", "owner ID" identifying the owner of the portable device, and "IC card ID" identifying the noncontact IC card module.

If the decision unit 225 grants permission to execute the communication process with the noncontact IC card module 223 (step S817), mutual authentication between the communication unit 235 and the noncontact IC card module 223 is performed via the communication network 106, the gateway 117, the packet communication network 115, the base station 113, and the execution part 213 of the portable communication terminal 103 (step S819). More specifically, in the mutual authentication, the communication unit 235 checks whether the IC card ID of the portable communication terminal 103 is identical to the IC card ID included in the granted license information.

Although in the present embodiment, it is assumed that the mutual authentication between the communication unit 235 and the noncontact IC card module 223 is performed via the communication network 106, the gateway 117, the packet communication network 115, the base station 113, and the execution part 213 of the portable communication terminal 103, the mutual authentication may be performed in a different way. For example, the mutual authentication between the communication unit 235 and the noncontact IC card module 223 may be performed via the reader/writer 111 (step S819).

If the mutual authentication between the communication unit 235 and the noncontact IC card module 223 is successfully completed (step S819), the communication unit 235 transmits, to the noncontact IC card module 223, information indicating the details of the communication process specified by the request received during the authentication process associated with the portable communication terminal 103 or received separately after the authentication process is completed, thereby performing the communication process with the noncontact IC card module 223 (step S821). The communication process performed in step S821 is similar to that performed in step S717 described above, and thus a further explanation thereof is omitted herein.

The authentication processes described above with reference to Fig. 7 or 8 may be modified, for example, such that only the ID authentication process by the ID authentication unit 219 is performed. In the following discussion, an explanation of similar processing steps to those described above with reference to Fig. 7 or 8 will be omitted.

As can be understood from Fig. 7 or Fig. 8, when only the ID authentication process by the ID authentication unit 219 is performed, it is sufficient if the portable communication terminal 103 transmits only the client application ID to the agent system server 205 without having to transmit the granted license information. Therefore, it is not necessary to access the service providing system 101, although the result is a reduction in the security level, which causes an increase in the risk that an unauthorized portable communication terminal illegally receives service.

After the portable communication terminal 103 transmits the client application ID to the agent system server 205, the authentication process is performed in substantially the same manner as described above with reference to Fig. 7 or Fig. 8, and thus an explanation thereof is omitted herein.

### Writing Process

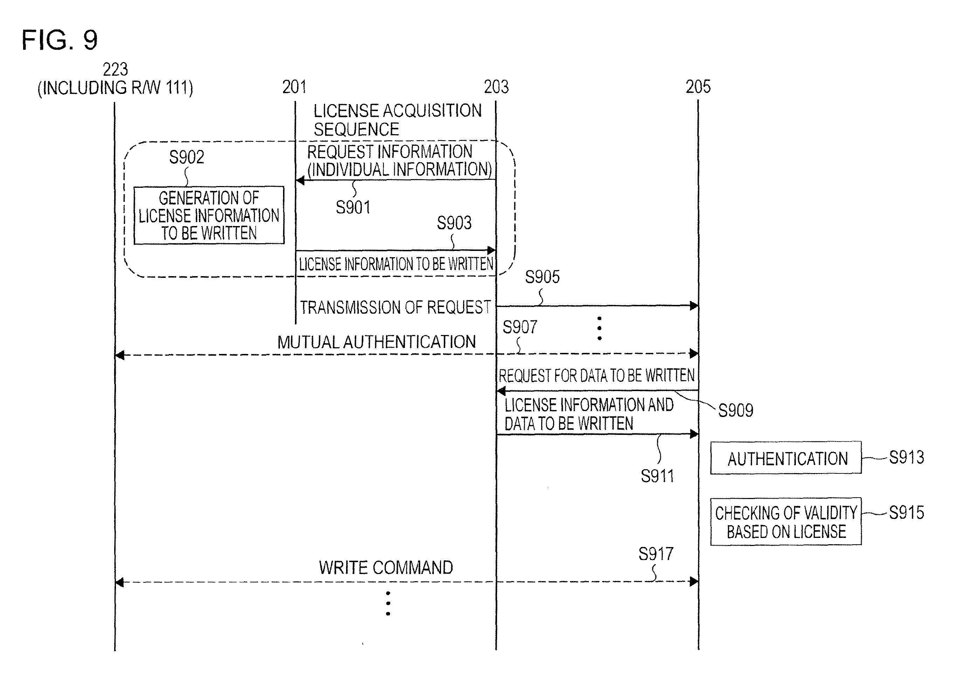

Now, referring to Fig. 9, the writing process to write data into the noncontact IC card module 223 according to the present embodiment is described below. Fig. 9 is a sequence diagram illustrating, in a simplified manner, the writing process to write data into the noncontact IC card module according to the present embodiment of the invention.

Although in the writing process shown in Fig. 9, an authentication process is not shown, it is assumed herein that the authentication process has already been performed in a similar manner as described above with reference to Fig. 7 or 8.

As shown in Fig. 9, in the writing process to write data into the noncontact IC card module 223, the application software 203 first accesses the service providing server 201 and transmits request information including individual information (step S901).

If the service providing server 201 receives individual information from the application software 203, then, as described above, the service providing server 201 produces granted license information for use in the writing process (step S902), and transmits the resultant granted license information to the application software 203 of the portable communication terminal 103 that has issued the request (step S903).

Subsequently, the application software 203 sends a request to perform the writing process to the agent system server 205 via the execution part 213 (step S905). The agent system server 205 performs authentication associated with the portable communication terminal 103, although an explanation of details thereof is omitted herein.

If the decision unit 225 in the agent system server 205 determines that the communication process should be permitted, the communication unit 235 and the noncontact IC card module 223 perform mutual authentication (step S907). The mutual authentication process is not described in further detail herein because it is performed in a similar manner as described above.

If the mutual authentication (step S907) is successfully completed, the communication unit 235 in the agent system server 205 requests the application software 203 to supply data to be written in the storage means in the noncontact IC card module 223 (step S909).

The application software 203 transmits the received granted license information associated with the writing process and the data to be written to the agent system server 205 via the execution part 213 (step S911).

The data that is written in the communication process (step S911) may be produced by the application software 203 or may be directly supplied from the service providing server 201. Alternatively, other data may also be written in the communication process.

In the communication process (step S911), the data to be written and the granted license information for use in the writing process are encrypted using the client authentication key 221b, as shown in Fig. 3.

If the authentication unit 215 receives the data to be written and the granted license information associated with the writing process, the system authentication unit 216 or the portable communication terminal authentication unit 217 decrypts the encrypted data to be written and granted license information associated with the writing process. By checking whether the decryption can be successfully performed, the authentication unit 215 verifies the validity of the service providing server 201 or the portable communication terminal 103, which is the sender of the data (step S913).

The decision unit 225 determines whether the respective items of the usage license such as the usage count described in the received granted license information are valid (step S915). If it is determined that the usage license is valid, the decision unit 225 commands the communication unit 235 to perform the writing process. As for the items of the usage license, in addition to the usage count, the decision unit 225 may also check other items such as the portable terminal hardware ID.

The communication unit 235 transmits a write command together with the data to be written to the noncontact IC card module 223. In accordance with the write command, the noncontact IC card module 223 writes the data in a specified storage area of the storage unit (step S917). Thus, the writing process according to the present embodiment is completed.

Although in the writing process shown in Fig. 9, the data to be written and the license information associated with the writing process are encrypted, the data and the license information may be treated in a different way. For example, no encryption may be performed in the writing process or an electronic signature may be attached to the data. Alternatively, after an electronic signature is attached to the data, the data with the attached electronic signature may be encrypted. That is, any combination of one or more processes for security may be employed.

### Reading Process

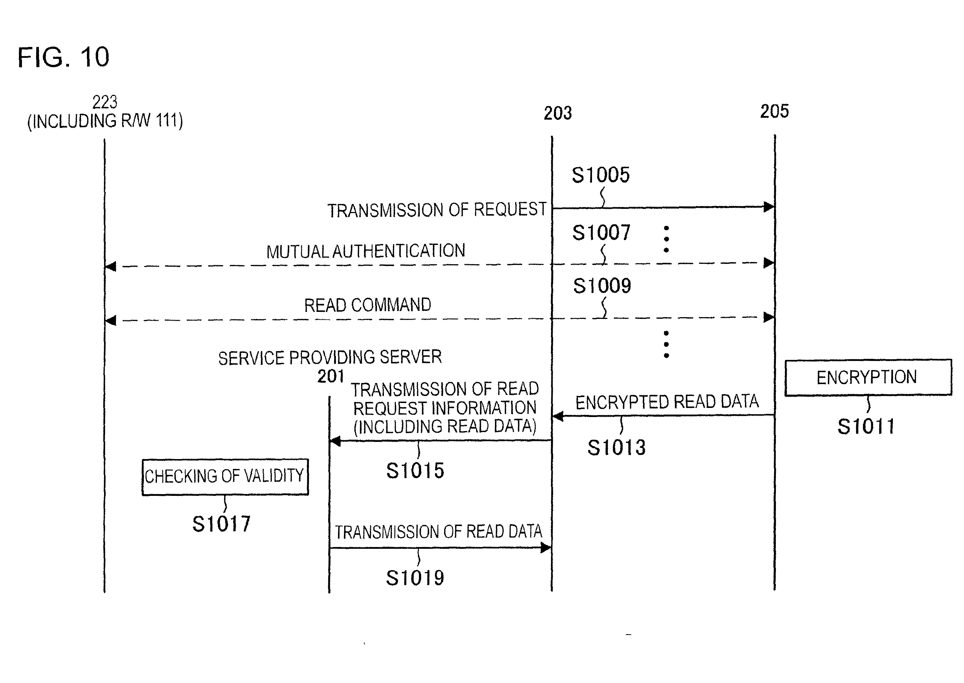

Now, referring to Fig. 10, the reading process to read data from the noncontact IC card module 223 according to the present embodiment of the invention is described below. Fig. 10 is a sequence diagram illustrating, in a simplified manner, the reading process to read data from the noncontact IC card module according to the present embodiment of the invention.

Although in the reading process shown in Fig. 10, the authentication process is not shown, it is assumed herein that the authentication process has already been performed in a similar manner as described above with reference to Fig. 7 or 8.

As shown in Fig. 10, the application software 203 sends a request to perform a reading process to the agent system server 205 via the execution part 213 (step S1005). The agent system server 205 performs authentication associated with the portable communication terminal 103, although an explanation of details thereof is omitted herein.

If the decision unit 225 in the agent system server 205 determines that the communication process should be permitted, the communication unit 235 and the noncontact IC card module 223 perform mutual authentication (step S1007). The mutual authentication process is not described in further detail herein because it is performed in a similar manner as described above.

If the mutual authentication (step S1007) is successfully completed, the communication unit 235 in the agent system server 205 transmits a read command to the noncontact IC card module 223. On receiving the read command, the noncontact IC card module 223 reads data from a specified storage area of the storage unit (step S1009). If the noncontact IC card module 223 reads the data, the noncontact IC card module 223 transmits the read data as a reply to the communication unit 235. It is assumed that the storage area (address) of the storage unit from which to read the data is specified when the request is issued by the application software 203 (step S1005).

If the agent system server 205 receives the data from the noncontact IC card module 223, the system authentication unit 216 or another authentication unit of the agent system server 205 encrypts the data using the system authentication key 220a (step S1011).

The agent system server 205 transmits the encrypted read data to the portable communication terminal 103 via the communication network 106 (step 51013).

If the application software 203 receives the encrypted read data, the application software 203 transmits read request information including the encrypted data and individual information to the service providing server 201 (step S1015).

If the license authentication unit 241 receives the request information, the license authentication unit 241 decrypts the received data using the system authentication key 220b corresponding to the system authentication key 220a used in the data encryption process performed by the service providing server 201. By performing the decryption, the license authentication unit 241 verifies the validity of the service providing server 201 which is the data sender (step S1017).

The license authentication unit 241 retrieves the license corresponding to the client application ID described in the received request information from the license database (not shown) and checks whether the respective items of the usage license such as the usage count are valid based on from the license database (step S1017). As for the items of the usage license, in addition to the usage count, the decision unit 225 may also check other items such as the portable terminal hardware ID.

If the authentication by the license authentication unit 241 is successfully passed (step S1017), the data read from the noncontact IC card module 223 is transmitted to the portable communication terminal 103 (step S1019). On receiving the data, the data is displayed on a display screen by the application software 203.

For example, in a case in which the service provided by the service providing system 101 is to give points, information indicating the current total point or the like is read from the noncontact IC card module 223 and displayed on the display screen to inform a user of the point. Thus, the reading process according to the present embodiment is completed.

Although in the reading process shown in Fig. 10, the read data is encrypted, the read data may be treated in a different way. For example, no encryption may be performed in the reading process or an electronic signature may be attached to the read data. Alternatively, after an electronic signature is attached to the data, the data with the attached electronic signature may be encrypted. That is, any combination of one or more processes for security may be employed.

The sequence of processing steps described above with reference to Figs. 7 to 10 may be performed by means of hardware or software. When the processes are performed by software, a software program is installed on an information processing apparatus such as a general-purpose computer or a microcomputer so that the information processing apparatus functions as the agent system server 205, the service providing server 201, or the portable communication terminal 103.

The program may be stored beforehand in the storage medium such as a hard disk or a ROM installed in the computer. Alternatively, the program may be stored (recorded) temporarily or permanently on a floppy disk, a CD-ROM (Compact Disc Read Only Memory), an MO (Magnetooptical) disk, or a DVD (Digital Versatile Disc).

The program may be transferred to the computer via a wireless transmission channel such as a satellite communication channel or via a wired communication channel such as a LAN (Local Area Network) or the Internet.

In the present invention, the processing steps described in the program to be executed by a computer to perform various kinds of processing are not necessarily required to be executed in time sequence according to the order described in the sequence diagram. Instead, the processing steps may be performed in parallel or separately (by means of parallel processing or object processing).

The program may be executed either by a single computer or by a plurality of computers in a distributed fashion.

The data communication system 100 has been described above with reference to specific embodiments. As can be understood from the above description, the data communication system 100 has the following advantages.
(1) A plurality of authentication processes are provided, and an arbitrary combination of the plurality of authentication processes may be selected depending on the security level required for the service providing system 101. A service provider can easily set/change the combination of authentication processes depending on the required security and/or other factors such as cost. For example, when the security level required by the service providing system 101 is high, a one-time license is applied. On the other hand, the security level required by the service providing system 101 is not very high, the authentication may be performed using only a client application ID.
(2) When the license authentication capability is used, the service provider is allowed to arbitrarily define the period of validity of the license depending on the security policy. For example, a license with an indefinite period or a one-time license may be allowed.
(3) Because devices that are given licenses to receive services are limited to portable communication terminals 103, it is difficult for unauthorized persons to illegally receive services.
(4) Because the application software 203 has the capability of managing the status in terms of communication with servers or the like, connecting can be easily retried when connecting via a communication network fails.
(5) The traffic by the application software 203 can be reduced.
(6) Providing the customizable authentication capability to the agent system 105 makes it easy to build a total system including the agent system and the service providing system.
(7) The mutual authentication performed between the noncontact IC card module 223 and the agent system 105 makes it unnecessary for the service providing system 101 to perform a further authentication process to authenticate the agent system 105.
(8) In the data communication system, because each portable communication terminal 103 can be authenticated by using the system authentication key or the like without needing identification information identifying each portable communication terminal 103, the data communication system can be realized in a highly flexible and versatile fashion so that the communication process can be executed and service can be provided regardless of carriers or types of portable communication terminals 103.

The present invention has been described above with reference to specific embodiments. It should be understood by those skilled in the art that various modifications, combinations, sub-combinations and alterations may occur depending on design requirements and other factors insofar as they are within the scope of the appended claims or the equivalents thereof.

For example, in the embodiments described above, the data communication system 100 includes one service providing system 101 and one agent system 105. However, there is no particular restriction on the number of service providing systems or agent systems. For example, the data communication system 100 may include a plurality of service providing systems 101 managed by respective service providers. Similarly, the data communication system 100 may also include a plurality of agent systems 105.

In the embodiments described above, each part of the service providing system 101 is realized by hardware. However, each part may be realized in another way. For example, each part of the service providing server 101 may be realized by software including one or more program modules or components.

In the embodiments described above, each part of the agent system 105 is realized by hardware. However, each part may be realized in another way. For example, each part of the service providing server 101 may be realized by software including one or more program modules or components.

In the embodiments described above, the application software 203 and the execution part 213 included in each portable communication terminal 103 are respectively realized by software including one or more program modules or components. However, they may be realized in another way. For example, each of them may be realized by one or more hardware components.

In the embodiments described above, a portable telephone having a noncontact IC card module is used as each portable communication terminal 103. However, another type of device may also be employed as along as the device has a noncontact IC card module 223 and is capable of communicating with an external device via a communication network. For example, a notebook type personal computer, a PDA (Personal Digital Assistant) device, or the like may be employed as the portable communication terminal 103.

In the embodiments described above, communication for mutual authentication or for other purposes between the communication unit 235 and the noncontact IC card module 223 is performed via the communication network 106, the gateway 117, the packet communication network 115, the base station 113, and the execution part 213 of the portable communication terminal 103, communication may be performed in another way. For example, the communication unit 235 may communicate with the noncontact IC card module 223 via the communication network 104, the reader/writer 111 disposed in the information processing apparatus 109, and the execution part 213 of the portable communication terminal 103.

As described above, the present invention provides the advantage that in a data communication system, it is possible to authenticate a communication terminal/apparatus according to a combination of one or more of a plurality of authentication methods selected depending on a required security level, and thus a service provider can provide service to portable communication terminals regardless of the types thereof.

### Industrial Applicability

The present invention is applicable to a data communication system, an agent system server, a computer program, and a data communication method.

## Claims

1. A data communication system comprising one or more portable communication terminals each including a noncontact IC card module adapted to perform information processing in response to a request from the outside, a service providing system adapted to provide a service via the information processing performed by the noncontact IC card module, and an agent system adapted to perform, for the service providing system, a communication process with the noncontact IC card module,
the portable communication terminal including a requesting unit adapted to request the service providing system to provide granted license information possessed by the service providing system, the granted license information indicating a license associated with the communication process granted to the portable communication terminal, the license information being necessary for the communication process between the noncontact IC card module and the agent system,
the service providing system including an acquisition unit adapted to, if a request is received from one of the portable communication terminals, acquire granted license information associated with the portable communication terminal that has issued the request,
the acquired granted license information being encrypted by the service providing server using a system authentication key that is possessed by both the agent system and the service providing system and that is used to encrypt/decrypt information, the granted license information being further encrypted by the portable communication terminal using a client authentication key that is possessed by both the portable communication terminal and the agent system and that is used to encrypt/decrypt information, and the resultant granted license information being transmitted to the agent system,
the agent system including
an authentication unit adapted to perform, based on the granted license information received from the portable communication terminal, at least one of a plurality of authentication processes including a system authentication process to authenticate the service providing system based on the system authentication key, a first client authentication process to authenticate the portable communication terminal based on the client authentication key, and a second client authentication process to authenticate the portable communication terminal based on identification information identifying the portable communication terminal,
a decision unit adapted to, after the authentication by the authentication unit is completed, determine whether to permit communication or not, based on the license described in the granted license information, and
a communication unit adapted to, if communication is permitted by the decision unit, perform the communication process with the noncontact IC card module.

2. The data communication system according to Claim 1, wherein the authentication unit receives a selection command specifying a combination of one or more of the plurality of authentication processes and performs the combination of one or more of the plurality of authentication processes according to the received selection command.

3. The data communication system according to Claim 1, wherein the communication process performed by the communication unit is a process of making the noncontact IC card module perform a writing process or a reading process.

4. The data communication system according to Claim 3, wherein the authentication unit receives a selection command specifying one or both of two processes including a process of encrypting data to be read in the reading process and a process of adding an electronic signature produced based on the data to the data, and the authentication unit performs the one or both of processes according to the selection command.

5. The data communication system according to Claim 3, wherein the authentication unit receives a selection command specifying one or both of two processes including a process of decrypting encrypted data to be written in the writing process and a process of verifying the validity of the data based on an electronic signature added to the data, and the authentication unit performs the one or both processes according to the received selection command.

6. The data communication system according to Claim 1, wherein the communication between the service providing system and the agent system is performed via the portable communication terminal.

7. The data communication system according to Claim 1, wherein the first client authentication process is a challenge response authentication process in which a challenge code is transmitted to the portable communication terminal which in turn produces a response based on the challenge code and the granted license information and returns the resultant response, and the authentication is performed based on the received response.

8. The data communication system according to Claim 1, wherein the portable communication terminal is a portable telephone.

9. An agent system server adapted to, for a service providing server, perform a communication process with a noncontact IC card module, the service providing server being adapted to provide a service via information processing performed by the noncontact IC card module included in a portable communication terminal, the agent system server comprising:
a receiving unit adapted to receive granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information;
an authentication unit adapted to perform, based on granted license information received from the portable communication terminal, a combination of one or more of a plurality of authentication processes including a system authentication process to authenticate the service providing system based on the system authentication key, a first client authentication process to authenticate the portable communication terminal based on the client authentication key, and a second client authentication process to authenticate the portable communication terminal based on identification information identifying the portable communication terminal;
a decision unit adapted to, after the authentication by the authentication unit is completed, determine whether to permit communication or not, based on the license described in the granted license information; and
a communication unit adapted to, if communication is permitted by the decision unit, perform the communication process with the noncontact IC card module.

10. The agent system server according to Claim 9, wherein the authentication unit receives a selection command specifying a combination of one or more of the plurality of authentication processes and performs the combination of one or more of the plurality of authentication processes according to the received selection command.

11. The agent system server according to Claim 9, wherein the communication process performed by the communication unit is a process of making the noncontact IC card module perform a writing process or a reading process.

12. The agent system server according to Claim 11, wherein the authentication unit receives a selection command specifying one or both of two processes including a process of encrypting data to be read in the reading process and a process of adding an electronic signature produced based on the data to the data, and the authentication unit performs the one or both of processes according to the selection command.

13. The agent system server according to Claim 11, wherein the authentication unit receives a selection command specifying one or both of two processes including a process of decrypting encrypted data to be written in the writing process and a process of verifying the validity of the data based on an electronic signature added to the data, and the authentication unit performs the one or both processes according to the received selection command.

14. A computer program that allows a computer to function as an agent system server adapted to, for a service providing server, perform a communication process with a noncontact IC card module, the service providing server being adapted to provide a service via information processing performed by the noncontact IC card module included in a portable communication terminal, the computer program comprising:
a receiving module adapted to receive granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information;
an authentication module adapted to perform, based on the granted license information received from the portable communication terminal, a combination of one or more of a plurality of authentication processes including a system authentication process to authenticate the service providing server based on the system authentication key, a first client authentication process to authenticate the portable communication terminal based on the client authentication key, and a second client authentication process to authenticate the portable communication terminal based on identification information identifying the portable communication terminal;
a decision module adapted to, after the authentication is completed, determine whether to permit communication or not, based on the license described in the granted license information; and
a communication module adapted to, if communication is permitted by the decision module, perform the communication process with the noncontact IC card module.

15. A data communication method for an agent system server to, for a service providing server, perform a communication process with a noncontact IC card module, the service providing server being adapted to provide a service via information processing performed by the noncontact IC card module included in a portable communication terminal, the method comprising the steps of:
receiving granted license information in an encrypted form from the portable communication terminal, the granted license information indicating a license associated with the communication process between the noncontact IC card module and the agent system server, the granted license information being encrypted by the service providing server using a system authentication key that is possessed by both the agent system server and the service providing server and that is used to encrypt/decrypt information, and the granted license information being further encrypted by the portable communication terminal using a client authentication key that is possessed by both the portable communication terminal and the agent system server and that is used to encrypt/decrypt information;
performing, based on the granted license information received from the portable communication terminal, a combination of one or more of a plurality of authentication processes including a system authentication process to authenticate the service providing server based on the system authentication key, a first client authentication process to authenticate the portable communication terminal based on the client authentication key, and a second client authentication process to authenticate the portable communication terminal based on identification information identifying the portable communication terminal;
after the authentication step is completed, determining whether to permit communication or not, based on the license described in the granted license information; and
if communication is permitted in the determination step, performing the communication process with the noncontact IC card module.
